## Europäisches Patentamt

## European Patent Office

## Office européen des brevets

(19)

(11) Veröffentlichungsnummer: **0 093 368**

**B1**

(12)

# EUROPÄISCHE PATENTSCHRIFT

(45) Veröffentlichungstag der Patentschrift:
18.03.87

(51) Int. Cl.⁴: **C 08 B 11/193**

(21) Anmeldenummer: **83104023.3**

(22) Anmeldetag: **25.04.83**

(54) Verfahren zur Herstellung von Hydroxyalkylmethylcellulosen.

(30) Priorität: **05.05.82 DE 3216796**

(43) Veröffentlichungstag der Anmeldung:
**09.11.83 Patentblatt 83/45**

(45) Bekanntmachung des Hinweises auf die Patenterteilung:
**18.03.87 Patentblatt 87/12**

(84) Benannte Vertragsstaaten:
**BE DE FR GB IT NL SE**

(56) Entgegenhaltungen:
**DE-B-1 177 127**
**DE-B-1 222 031**
**FR-A-1 455 642**
**GB-A-1 139 519**

(73) Patentinhaber: **Wolff Walsrode Aktiengesellschaft, Postfach, D-3030 Walsrode 1 (DE)**

(72) Erfinder: **Balser, Klaus, Dr., Am Badeteich 16, D-3030 Walsrode 1 (DE)**

(74) Vertreter: **Zobel, Manfred, Dr., c/o BAYER AG Konzernverwaltung RP Patentabteilung Bayerwerk, D-5090 Leverkusen (DE)**

EP 0 093 368 B1

**0 093 368**

## Beschreibung

Die vorliegende Erfindung betrifft Verfahren zur Herstellung von wasserlöslichen Hydroxyalkylmethylcellulosen, nach denen mit weit geringeren Mengen an Veretherungsmittel als üblich eine ausreichende Veretherung der Alkalicellulose erzielt wird.

Erfahrungsgemäß müssen zur Herstellung einer gut wasserlöslichen Hydroxyethylcellulose pro Mol Cellulose zur Alkalisierung mindestens 1,2 Mole NaOH eingesetzt werden. Das entspricht nach der Neutralisation mit Essigsäure einem Salzgehalt von mindestens 26 %. Durch die Alkalisierung mit diesem Mindesteinsatz von Alkali wird das Kristallgitter der nativen Cellulose in das der reaktionsfähigen Natroncellulose umgewandet, die der Veretherung zugänglich ist. Aus der Literatur (siehe Götze, Chemiefasern nach dem Viskoseverfahren, Band I, Seite 349, Springer-Verlag 1967, 3. Auflage) ist bekannt, daß in der Natroncellulose 1 Mol NaOH pro Mol Cellulose chemisch gebunden ist, während der Überschuß an NaOH adsorptiv gebunden vorliegt. Durch diesen Überschuß des Alkali wird jedoch das Veretherungsmittel Epoxid zu einem erheblichen Teil zu Nebenprodukten (Polyglykole und Polyglykolether) umgesetzt und die Chemikalienausbeute beträchtlich geschmälert. Außerdem beeinflußt der hohe Wassergehalt der zur Veretherung vorgesehenen, mit üblichen Methoden erhaltenen Alkalicellulose die Veretherungsreaktion.

Gemäß der DE-AS 1.177.127 hat man versucht, diese Nachteile durch ein 2-Stufen-Verfahren zu beheben. In der ersten Stufe wird in Gegenwart von 0,8 - 3,2 Molen NaOH pro Mol Cellulose die Cellulose bis zu einem molaren Substitutionsgrad von 0,8 hydroxyethyliert und dann der Überschuß an Alkali durch Auswaschen mit Wasser oder wäßrigen Alkoholen entfernt. In der zweiten Stufe wird das teiloxyalkylierte Produkt in Gegenwart des Restalkali bis zum wasserlöslichen Ether (molarer Substitutionsgrad von > 2) weiter oxyalkyliert. Nach der Neutralisation werden durch Auswaschen mit üblichem Lösungsmittel die störenden Salze entfernt. Die Bildung von Nebenprodukten während der Veretherungsreaktion kann dabei aber nicht unterbunden werden.

Überraschenderweise wurde nun gefunden, daß es gelingt, eine wasserlösliche Hydroxyalkylmethylcellulose durch eine einstufige Veretherungsreaktion einer Alkalicellulose mit deutlich geringerem Alkaligehalt herzustellen.

Gegenstand der Erfindung sind daher Verfahren zur Herstellung von wasserlöslicher Hydroxyalkylmethylcellulose durch Alkalisierung der Cellulose mit Natronlauge wobei der Alkaligehalt der wäßrigen Alkalicellulose mindestens 1,2 Mole NaOH/Mol Cellulose beträgt und anschließender Veretherung mit Alkylenoxid in einem inerten Lösungsmittel, dadurch gekennzeichnet, daß vor Beginn der Veretherungsreaktion der Alkaligehalt der wäßrigen Alkalicellulose durch Auswaschen mit einem geeigneten, bekannten Lösungsmittel-(gemisch) das nicht Methylchlorid ist auf 0,3 - 0,8, vorzugsweise 0,5 - 0,6 Mol NaOH/Mol Cellulose gesenkt und anschließend mit einem Alkylenoxid, vorzugsweise Ethylenoxid, in flüssigem Methylchlorid, verethert und gegebenenfalls nochmals ausgewaschen wird.

Die nach dem Tauchpressen- oder Maischalkalisierungsverfahren hergestellte Alkalicellulose, die durchschnittlich 1,7 bis 1,9 Mole NaOH pro Mol Cellulose enthält, wird erfindungsgemäß zunächst einer Lösungsmittelwäsche unterworfen. Hierfür eignen sich zweckmäßigerweise Waschzentrifugen, in denen die Alkalicellulose mit verschiedenen hierfür üblichen Lösungsmittel-(gemischen), vorzugsweise Wasser/Alkohol oder Wasser/Keton-Gemische wie z.B. Aceton/Wasser (85:15), Isopropanol/Wasser (85:15), Methanol/Aceton (50:50) und Methanol/Wasser (85:15), vorzugsweise mit der 2 - 10-fachen Menge Lösungsmittel bezogen auf Alkalicellulose, behandelt wird. Vorzugsweise wird ein Methanol/ Wasser (85:15) -Gemisch verwendet, das nach dem Auswaschen abgeschleudert wird.

Die auf einen Gehalt von vorzugsweise 0,5 - 0,6 Molen NaOH pro Mol ausgewaschene Alkalicellulose wird mit Alkylenoxid, vorzugsweise Ethylenoxid, in Gegenwart von Methylchlorid, in flüssiger Phase, verethert. Die Verwendung von Methylchlorid bietet den Vorteil, daß die in der Alkalicellulose befindliche NaOH im Verlaufe der Veretherung in Folge der Verseifung des Methylchlorids weitgehend neutralisiert wird, so daß es nicht notwendig ist, nach beendeter Veretherung eine separate Neutralisation mittels einer anorganischen oder organischen Säure vorzunehmen. Die Veretherung erfolgt vorzugsweise in Autoklaven bei Temperaturen von 90-100°C.

Das erfindungsgemäße Verfahren bringt demnach folgende Vorteile mit sich:

1. Die ausgewaschene Alkalimenge läßt sich leicht zurückgewinnen und kann wieder eingesetzt werden.

2. Der geringe Alkali- und Wassergehalt in der Alkalicellulose reduziert die Bildung von Nebenprodukten aus den Veretherungsmitteln erheblich, so daß weit weniger Veretherungsmittel notwendig sind.

3. Aus diesem Grunde kann die Veretherung nicht bei den üblichen Temperaturen von 30 bis 60°C, sondern auch bei höheren Temperaturen (bis zu 100°C) durchgeführt werden. Dadurch erreicht man kürzere Reaktionszeiten bei gleichbleibender Substitution und Ausbeute.

4. Der geringe Alkaligehalt der veretherten Cellulose erfordert eine entsprechend niedrigere Menge an Neutralisationsmittel.

5. Der durch die Neutralisation entstandene Salzgehalt im Endprodukt ist höchstens halb so groß wie bei Verwendung einer nicht ausgewaschenen Alkalicellulose, so daß die wasserlöslichen Produkte ohne zusätzliche Reinigung für bestimmte Anwendungsgebiete eingesetzt werden können.

6. Wird eine salzfreie Hydroxyalkylmethylcellulose gewünscht, so läßt sich das nach dem erfindungsgemäßen Verfahren hergestellte technische Produkt mit weit geringerem Aufwand reinigen.

Die erfindungsgemäß hergestellte Hydroxyalkylmethylcellulose kann für alle bekannten Anwendungszwecke wie z.B. Dispersionsanstrichfarben oder Bohrhilfsmittel eingesetzt werden.

2

## Beispiel 1

Ein Nadelholz-Chemiezellstoff mittlerer Viskositätseinstellung wurde durch Maischalkalisierung mit einer Natronlauge von 200 g NaOH pro Liter bei 32° C alkalisiert und auf einen Preßfaktor PA von 2,7 abgepreßt.

$$PA= \frac{\text{Gewicht der feuchten Alkalicellulose}}{\text{Gewicht der eingesetzten Cellulose}}$$

Die Alkalicellulose hatte folgende Zusammensetzung:

|  | Gew.-% | Molverhältnis zu Cellulose |
|---|---|---|
| Cellulose | 33 | 1 |
| NaOH | 16 | 1,96 |
| Wasser | 51 | 13,9 |

Diese Alkalicellulose wurde in einer Waschzentrifuge mit dem Lösemittelgemisch Methanol/H$_2$O (85:15 Gew.-%) portionsweise ausgewaschen und bei 2.800 Umdrehungen/Minute 6 Minuten lang abgeschleudert. Die Lösemittelmenge betrug 10 l pro 1 kg eingesetzte Alkalicellulose. Die ausgewaschene Alkalicellulose hatte folgende Zusammensetzung:

|  | Gew.-% | Molverhältnis zu Cellulose |
|---|---|---|
| Cellulose | 58 | 1 |
| NaOH | 5 | 0,37 |
| Lösemittel | 20 | 1,75 |
| Wasser | 17 | 2,6 |

1.725 g dieser ausgewaschenen Alkalicellulose wurden in einem Rührautoklaven mit 1.500 g Ethylenoxid und 4.800 g Methylchlorid unter gleichmäßigem Rühren versetzt. Anschließend wurde die Temperatur auf 55° C gesteigert und 3 Stunden gehalten. Anschließend wurde die Temperatur auf 65° C erhöht und 1,5 Stunden lang gehalten. Dann wurden das Methylchlorid und das nicht umgesetzte Ethylenoxid abgeblasen und in einer gekühlten Vorlage gesammelt. Durch Anlegen von Unterdruck wurde das Methylchlorid und das Ethylenoxid weitgehend entfernt. Das Produkt wurde im Umlufttrockner bei Temperaturen unter 100° C getrocknet.

Der erhaltene Celluloseether hatte folgende analytische Daten:
Molarer Substitutionsgrad bezüglich Hydroxyethyl: 2,03
Durchschnittlicher Substitutionsgrad bezüglich Methoxyl: 0,22
NaCl          7,5 Gew.-%

Das Produkt war wasserlöslich, die Lösung ist jedoch infolge von faserigen und gelartigen Anteilen getrübt (Lösungsnote 5 auf einer von 1 - 6 reichenden Wertskala). Die Viskosität einer 3 gew.-%igen Lösung betrug 3.020 mPas, gemessen in einem Rotationsviskosimeter. Der pH betrug 9,5. Bis 100° C trat kein Flockpunkt ein.

## Beispiel 2

Eine durch Maischalkalisierung hergestellte Alkalicellulose wurde wie unter Beispiel 1 mit Methanol/H$_2$O (85:15 Gew.-%) ausgewaschen, jedoch mit nur 4 l Lösemittel pro kg eingesetzte Alkalicellulose. Die ausgewaschene Alkalicellulose hatte folgende Zusammensetzung:

|  | Gew.-% | Molverhältnis zu Cellulose |
|---|---|---|
| Cellulose | 52,5 | 1 |
| NaOH | 6,5 | 0,5 |
| Lösungsmittel | 20 | 1,9 |
| Wasser | 21 | 3,6 |

1.900 g dieser ausgewaschenen Alkalicellulose wurden in einem Rührautoklaven mit 1.500 g Ethylenoxid und 4.900 g Methylchlorid versetzt, auf 90-94°C aufgeheizt und 3 Stunden bei dieser Temperatur belassen. Das Abblasen von Methylchlorid und nicht umgesetztem Ethylenoxid sowie das Trocknen des Produkts erfolgten wie unter Beispiel 1 beschrieben.

Folgende analytische Daten des erhaltenen Celluloseethers wurden ermittelt:
Molarer Substitutionsgrad bezüglich Hydroxyethyl:       2,21
Durchschnittlicher Substitutionsgrad bezüglich Methoxyl: 0,31
NaCl                                                    10,7 Gew.-%
Das Produkt war wasserlöslich, die Lösung nur geringfügig getrübt (Lösungsnote 3 - 4). Die Viskosität in 3 gew.-%iger Lösung betrug 775 mPas, der pH betrug 8,1. Ein Flockpunkt bis 100°C wurde nicht festgestellt.

**Beispiel 3**

Durch Maischalkalisierung hergestellte Alkalicellulose wurde wie unter Beispiel 1 mit Methanol/Wasser (85:15 gew.-%) ausgewaschen, aber mit nur 2,7 l Lösemittel pro kg eingesetzte Alkalicellulose. Die ausgewaschene Alkalicellulose hatte folgende Zusammensetzung:

|            | Gew.-% | Molverhältnis zu Cellulose |
|------------|--------|----------------------------|
| Cellulose  | 55     | 1                          |
| NaOH       | 7,5    | 0,55                       |
| Lösemittel | 11,5   | 1,06                       |
| Wasser     | 26     | 4,3                        |

1.820 g dieser ausgewaschenen Alkalicellulose wurden im Rührautoklaven mit 1.500 g Ethylenoxid und 5.000 g Methylchlorid versetzt, die Temperatur wurde auf 90-95°C erhöht und 3 Stunden lang gehalten.

Folgende analytische Daten des Celluloseethers wurden festgestellt:
Molarer Substitutionsgrad bezüglich Hydroxyethyl:       2,60
Durchschnittlicher Substutionsgrad bezüglich Methoxyl: 0,33
NaCl                                                    12,3 Gew.-%
Im Wasser zeigte das Produkt hervorragende Klarlöslichkeit (Lösungsnote 1 - 2). Eine 3 gew.-%ige Lösung hatte eine Viskosität von 179 m.Pas, der pH betrug 8,6. Ein Flockpunkt bis 100°C wurde nicht festgestellt.

**Beispiel 4**

1.820 g ausgewaschener Alkalicellulose wie unter Beispiel 3 wurden mit 1.500 g Ethylenoxid und 5.000 g Methylchlorid versetzt und nach Temperaturerhöhung auf 100-102°C lediglich 1 Stunde lang verethert.

Die analytischen Daten lauteten wie folgt:
Molarer Substitutionsgrad bezüglich Hydroxyethyl:       2,61
Durchschnittlicher Substitutionsgrad bezüglich Methoxyl: 0,35
NaCl                                                    12,6 Gew.-%
Das Produkt war vollkommen klar wasserlöslich, wie in Beispiel 3. Eine 3 gew.-%ige Lösung hatte eine Viskosität von 197 mPas, der pH betrug 8,9. Ein Flockpunkt bis 100°C wurde nicht festgestellt.

**Patentansprüche**

1. Verfahren zur Herstellung von wasserlöslicher Hydroxyalkylmethylcellulose durch Alkalisierung der Cellulose mit Natronlauge, wobei der Alkaligehalt der wäßrigen Alkalicellulose mindestens 1,2 Mole NaOH/Mol Cellulose beträgt und anschließender Veretherung mit Alkylenoxid in einem Lösungsmittel, dadurch gekennzeichnet, daß vor Beginn der Veretherungsreaktion der Alkaligehalt der wäßrigen Alkalicellulose durch Auswaschen mit einem geeigneten, bekannten Lösungsmittel(gemisch), das nicht Methylchlorid ist, auf 0,3-0,8 Mol NaOH/Mol Cellulose gesenkt und anschließend mit einem Alkylenoxid in flüssigem Methylchlorid verethert und gegebenenfalls nochmals ausgewaschen wird.

2. Verfahren nach Anspruch 1, dadurch gekennzeichnet, dan der Alkaligehalt auf 0,5 - 0,6 Mol NaOH/Mol Cellulose gesenkt wird.

**0 093 368**

3. Verfahren nach Anspruch 1 oder 2, dadurch gekennzeichnet, daß als Lösungsmittelgemisch ein Wasser/Alkohol oder Wasser/Keton-Gemisch zum Auswaschen verwendet wird.

4. Verfahren nach Anspruch 3, dadurch gekennzeichnet, daß ein Methanol/Wasser-Gemisch verwendet wird.

5. Verfahren nach Ansprüchen 1-4, dadurch gekennzeichnet, daß Ethylenoxid in üblichen Mengen als Veretherungsreagenz verwendet wird.

## Claims

1. Process for the production of water-soluble hydroxyalkyl methyl cellulose by alkalising cellulose with sodium hydroxide solution, the alkali content of the aqueous alkali cellulose being at least 1.2 moles of NaOH/mole of cellulose, and then etherifying the resulting alkali cellulose with alkylene oxide in a solvent, characterised in that before the etherification reaction is begun the alkali content of the aqueous alkali cellulose is reduced to 0.3-0.8 mole of NaOH/mole of cellulose by washing with a suitable known solvent (mixture) which is not methyl chloride and then the resulting alkali cellulose is etherified with an alkylene oxide in liquid methyl chloride and the product is optionally washed again.

2. Process according to Claim 1, characterised in that the alkali content is reduced to 0.5 - 0.6 mole of NaOH/mole of cellulose.

3. Process according to Claim 1 or 2, characterised in that a water/alcohol or water/ketone mixture is used as the solvent mixture for the washing.

4. Process according to Claim 3, characterised in that a methanol/water mixture is used.

5. Process according to Claims 1-4, characterised in that ethylene oxide is used in customary quantities as the etherification reagent.

## Revendications

1. Procédé de fabrication d'hydroxyalcoylméthyl-cellulose soluble dans l'eau par alcalinisation de la cellulose avec de la soude caustique, la teneur en alcali de l'alcali-cellulose aqueuse étant d'au moins 1,2 mole de NaOH/mole de cellulose, avec éthérification consécutive avec un oxyde d'alcoylène dans un solvant, caractérisé en ce qu'avant le début de la réaction d'éthérification la teneur en alcali de l'alcali-cellulose aqueuse est abaissée par un lavage extractif avec un solvant (ou mélange) connu approprié à l'exclusion du chlorure de méthyle jusqu'à 0,3 - 0,8 mole de NaOH/mole de cellulose, on éthérifie ensuite avec un oxyde d'alcoylène dans du chlorure de méthyle liquide et l'on procède éventuellement encore une fois à un lavage extractif.

2. Procédé selon la revendication 1, caractérisé en ce que la teneur en alcali est abaissée à 0,5 - 0,6 mole de NaOH/mole de cellulose.

3. Procédé selon la revendication 1 ou 2, caractérisé en ce qu'on utilise comme mélange solvant pour le lavage extractif un mélange eau/alcool ou eau/acétone.

4. Procédé selon la revendication 3, caractérisé en ce qu'on utilise un mélange méthanol/eau.

5. Procédé selon les revendications 1 à 4, caractérisé en ce qu'on utilise comme réactif d'éthérification de l'oxyde d'éthylène en les quantités usuelles.

5